# EUROPEAN PATENT SPECIFICATION

(11) **EP 2 621 105 B1**
(45) Date of publication and mention of the grant of the patent: **20.09.2017**
(21) Application number: 12152967.1
(22) Date of filing: 27.01.2012
(51) Int. Cl.: H04B 7/04

(54) **Electronic device with multiple antenna diversity and related method**
Elektronisches Gerät mit Mehrantennendiversität und entsprechendes Verfahren
Dispositif électronique multi-antenne de diversité et procédé associé

(43) Date of publication of application: 31.07.2013
(62) Divisional of application: 12179066.1
(73) Proprietor: BlackBerry Limited, Waterloo, ON N2K 0A7 (CA)
(72) Inventor: Khan, Nasserullah, Waterloo, Ontario N2L 3W8 (CA)
(74) Representative: Roberts, Gwilym Vaughan

(56) References cited:
- EP-A1- 0 573 856
- US-A1- 2011 105 049

## Description

### Technical Field

This application relates to the field of communications, and more particularly, to wireless communications systems and related methods.

### Background

Cellular communication systems continue to grow in popularity and have become an integral part of both personal and business communications. Cellular telephones allow users to place and receive phone calls almost anywhere they travel. Moreover, as cellular telephone technology is improved, so too has the functionality of cellular devices. For example, many cellular devices now incorporate Personal Digital Assistant (PDA) features such as calendars, address books, task lists, calculators, memo and writing programs, etc. These multifunction devices usually allow users to wirelessly send and receive electronic mail (email) messages and access the Internet via a cellular network and/or a wireless local area network (WLAN), for example.

As the functionality of cellular devices continues to increase, so too does demand for smaller devices that are easier and more convenient for users to carry. Nevertheless, the move towards multi-functional devices makes miniaturization more difficult as the requisite number of installed components increases. Indeed, the typical cellular device may include several antennas, for example, a cellular antenna, a global positioning system antenna, and a WiFi IEEE 802.11g antenna. These antennas may comprise external antennas and internal antennas.

Generally speaking, internal antennas allow cellular devices to have a smaller footprint. Moreover, they are also preferred over external antennas for mechanical and ergonomic reasons. Internal antennas are also protected by the cellular device's housing and therefore tend to be more durable than external antennas. External antennas may be cumbersome and may make the cellular device difficult to use, particularly in limited-space environments. Yet, one potential drawback of typical internal antennas is that they are in relatively close proximity to the user's head when the cellular device is in use, thereby increasing the specific absorption rate (SAR). Also, other components within the cellular device may cause interference with the internal antenna.

US 2011/0105049 discloses a combination of antennas selected based on a distance between a plurality of antennas or the polarization direction of a radio signal to be transmitted/received.

EP 0573836 discloses a radio transceiver provided with an inbuilt antenna and with an antenna switch for an external antenna.

### Brief Description of the Drawings

FIG. 1 is a schematic block diagram of an example of an electronic device.
FIG. 2 is a flowchart illustrating operation of an example of an electronic device.
FIG. 3 is a schematic block diagram of another example of an electronic device.
FIG. 4 is a schematic diagram of an example of the wired connector from FIG. 1.
FIG. 5 is a schematic block diagram illustrating example components of a mobile wireless communications device that may be used with the electronic devices of FIGS. 1 and 3.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

According to a first aspect, an electronic device is provided and includes a mobile wireless communications device comprising a first housing, a spatial diversity wireless transceiver carried by the first housing, at least one first antenna carried by the first housing and coupled to the spatial diversity wireless transceiver, a processor, and a connector carried by the first housing and coupled to the spatial diversity wireless transceiver and the processor. The electronic device also includes an external antenna device comprising a second housing, and at least one second antenna carried thereby and configured to be coupled to the spatial diversity wireless transceiver. The spatial diversity wireless transceiver is configured to selectively operate the at least one first antenna and the at least one second antenna to provide spatial diversity. The connector being configured to couple the spatial diversity wireless transceiver to the at least one second antenna and to be coupled to a wired headset. The processor is configured to detect whether the external antenna device or the wired headset is coupled to the connector.

The mobile wireless communications device may comprise an interface carried by the first housing, coupled to the spatial diversity wireless transceiver, and configured to couple the spatial diversity wireless transceiver to the at least one second antenna, wherein the interface comprises the connector. The external antenna device may comprise a cable extending from the second housing and configured to be coupled between the at least one second antenna and the connector. For example, the connector may comprise a tip ring sleeve (TRS) connector carried by an external surface of the first housing.

In other examples, the interface may comprise a wireless local area networking (WLAN) transceiver configured to wirelessly couple the at least one second antenna to the spatial diversity wireless transceiver. For example, the interface may comprise a Bluetooth wireless transceiver configured to wirelessly couple the at least one second antenna to the spatial diversity wireless transceiver.

The processor may be configured to operate the spatial diversity wireless transceiver in a first multiple-input/multiple-output (MIMO) rank mode when the at least one second antenna is not connected to the spatial diversity wireless transceiver. The processor may be configured to operate the spatial diversity wireless transceiver in a second MIMO rank mode when the at least one second antenna is connected to the spatial diversity wireless transceiver, the second MIMO rank mode being greater than the first MIMO rank mode.

For example, the spatial diversity wireless transceiver may comprise a cellular 3GPP Long Term Evolution (LTE) transceiver. The at least one first antenna may be internal with respect to the first housing, and the at least one second antenna may be internal with respect to the second housing.

Another aspect is directed to a method of providing spatial diversity in an electronic device comprising a mobile wireless communications device including a first housing, a spatial diversity wireless transceiver carried by the first housing, at least one first antenna carried by the first housing and coupled to the spatial diversity wireless transceiver, and a connector carried by the first housing and coupled to the spatial diversity wireless transceiver, the connector also to be coupled to a wired headset. The method includes coupling an external antenna device comprising a second housing, and at least one second antenna carried thereby to the spatial diversity wireless transceiver, and using a processor to detect whether the external antenna device or the wired headset is coupled to the connector and to selectively operate the at least one first antenna and the at least one second antenna to provide the spatial diversity.

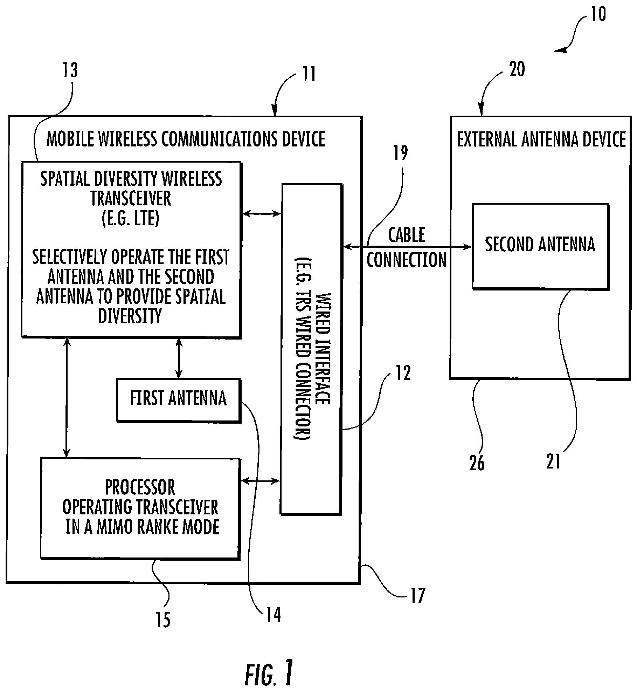

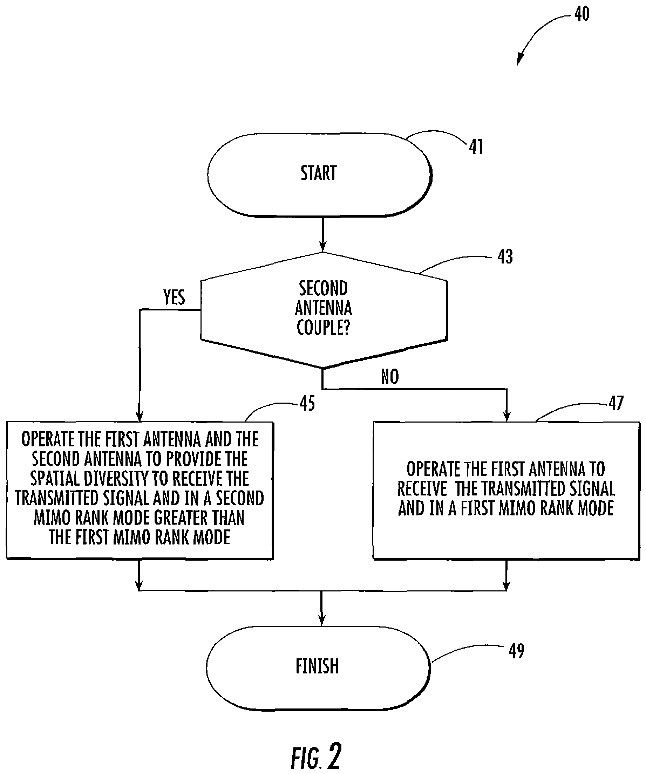

Referring now to FIG. 1, an electronic device **10** according to the present disclosure is now described. Moreover, with reference additionally to FIG. 2, a flowchart **40** illustrates a method of operating the electronic device **10** (Block **41**). The electronic device **10** illustratively includes a mobile wireless communications device **11,** and an external antenna device **20.** Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc. The mobile wireless communications device **11** includes a first housing **17,** a spatial diversity wireless transceiver **13** carried by the first housing, and a first antenna **14** carried by the first housing and coupled to the spatial diversity wireless transceiver. For example, the spatial diversity wireless transceiver **13** may comprise a cellular 3GPP LTE transceiver, and/or an IEEE 802.16 WiMAX transceiver.

The first antenna **14** may comprise a multi-band antenna, for example, including a plurality of tuning elements, patch structures, and slot structures. In the illustrated example, the mobile wireless communications device **11** includes one first antenna **14,** but in other examples, there may be a plurality of first antennas. The first antenna **14** is shown as being internal with respect to the first housing **17,** but may be, in other examples, external to the first housing.

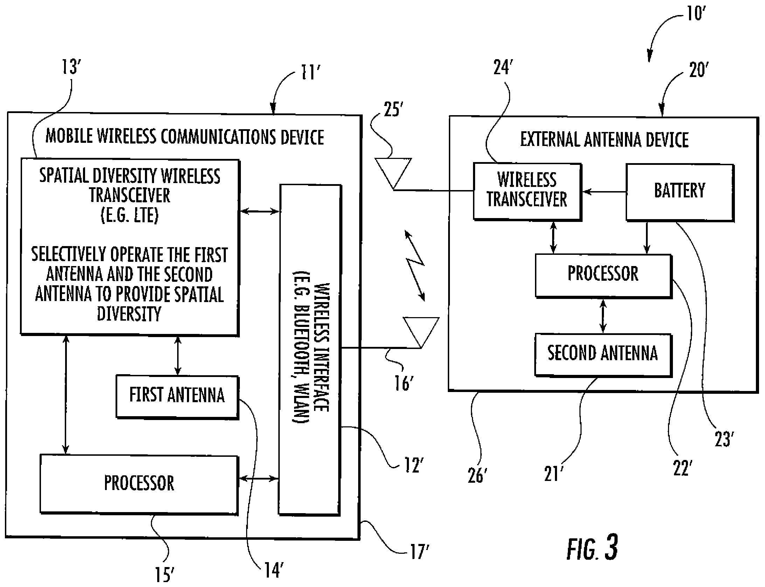

The mobile wireless communications device **11** also illustratively includes a processor **15** coupled to the spatial diversity wireless transceiver **13** and configured to generate data for transmission for the transceiver. For example, the processor **15** may include a single/multi core structure. The mobile wireless communications device **11** also illustratively includes an interface **12,** shown as a wired interface, coupling the spatial diversity wireless transceiver **13** and the external antenna device **20.** Of course, in other examples, the interface **12** may comprise a wireless interface (FIG. 3).

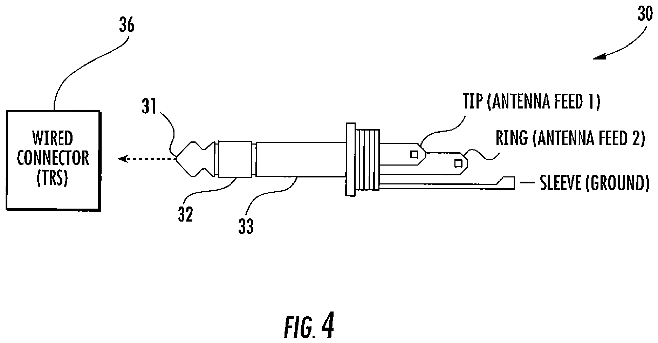

Referring briefly to FIG. 4, in some examples, the wired interface **12** includes a connector **36** carried by the first housing **17** and coupled to the spatial diversity wireless transceiver **13.** For example, the connector **36** may comprise a TRS connector carried by an external surface of the first housing **17.** In other examples, the connector **36** may comprise any suitable connector. The TRS connector **36** is configured to receive a corresponding TRS connector from a cable **19** of the external antenna device **20,** the cable connector comprising a tip connector **31** configured to provide a connection to a first antenna feed, a ring connector **32** configured to provide a connection to a second antenna feed, and a sleeve connector **33** configured to provide a connection to a ground.

In some examples, the TRS connector **36** of the wired interface **12** is the same TRS connector utilized for coupling an external wired headset (not shown). In these examples, the processor **15** is configured to detect whether the external antenna device **20** or a wired headset is coupled to the TRS connect and to operate the spatial diversity wireless transceiver **13** accordingly. In yet other examples, the connector **36** may comprise a micro universal serial bus (USB) connector, or a mini USB connector.

The external antenna device **20** comprises a second housing **26,** and a second antenna **21** carried thereby and configured to be coupled to the spatial diversity wireless transceiver **13** via the wired interface **12.** In the illustrated example, the second antenna **21** is internal with respect to the second housing **26,** but like the first antenna **14,** it also may be externally located.

Additionally, the external antenna device **20** comprises a cable connection **19** for coupling the external antenna device **20,** in particular, the second antenna **21,** to the wired interface **12.** The cable connection **19** extends from the second housing **26** and is configured to be coupled between the second antenna **21** and the connector. The cable connection **19** is removably connected to the wired interface **12.**

During operation of the electronic device **10,** if the user desires improved antenna performance, the user may connect the cable connection from the external antenna device **20** to the wired interface **12** (Block **43**). Once connected, the processor **15** and the spatial diversity wireless transceiver **13** are configured to selectively operate the first antenna **14** and the second antenna **21** to provide improved spatial diversity (Block **45**). Otherwise, i.e. the external antenna device **20** is not connected, the spatial diversity wireless transceiver **13** is configured to operate normally, i.e. conducting communications using only the first antenna **14** (Block **43**).

For example, if the user is about to activate a bandwidth intensive application on the mobile wireless communications device **11,** such as video streaming (uplink and downlink) or operate the device as a mobile hotspot base station, the user would then connect the external antenna device **20.** For improved performance, the external antenna device **20** should be positioned about 6-7 inches (LTE examples) from the mobile wireless communications device **11.** Of course, the external antenna device **20** could be placed at any convenient length. The external antenna device **20** is configured to serve as an additional high band and low band antenna for the mobile wireless communications device **11,** permitting it to operate in an LTE MIMO 4X4 (for high band) and 2x2 (in the low band) mode, for example. Advantageously, this may permit the electronic device **10** to offer improved data rates, range, and reliability without requiring additional bandwidth or transmit power. By using both first and second antennas **14, 21,** the electronic device **10** may create multiple independent channels for sending multiple data streams.

As will be appreciated by those skilled in the art, some wireless communications protocols may support a plurality of MIMO rank modes. Operating in a higher ranked mode permits the device to operate with increased data throughput. Advantageously, the processor **15** is configured to operate the spatial diversity wireless transceiver **13** in a first MIMO rank mode when the second antenna **21** is not connected to the spatial diversity wireless transceiver, for example, an LTE MIMO 2X2 (in the high band) and 1x1 (in the low band) mode, and the processor is configured to operate the spatial diversity wireless transceiver in a second MIMO rank mode, for example, the aforementioned LTE MIMO 4X4 (in the high band) and 2x2 (in the low band) mode, when the second antenna is connected to the spatial diversity wireless transceiver. The second MIMO rank mode is greater than the first MIMO rank mode. In other words, when the second antenna **21** is connected to the spatial diversity wireless transceiver **13,** the mobile wireless communications device experiences improved RF performance (Block **49**) and greater data throughput.

Referring now to FIG. 3, another example of the electronic device **10'** is now described. In this example of the electronic device **10'**, those elements already discussed above with respect to FIG. 1 are given prime notation and most require no further discussion herein. This example differs from the previous example in that the interface **12'** includes a wireless interface comprising a WLAN transceiver (interface) configured to wirelessly couple the second antenna **21'** to the spatial diversity wireless transceiver **13'.** Moreover, the mobile wireless communications device **11'** further includes an antenna **16'** coupled to the wireless interface **12'.** For example, the wireless interface **12'** may comprise a Bluetooth wireless transceiver configured to wirelessly couple the second antenna **21'** to the spatial diversity wireless transceiver **13'.**

The external antenna device **20'** also includes a wireless transceiver **24',** and an antenna **25'** cooperating therewith and for communicating with the wireless interface **12'** of the mobile wireless communications device **11'.** The external antenna device **20'** also includes a processor **22'** coupled between the second antenna **21'** and the wireless transceiver **24'.** In short, the processor coordinates the received data from the second antenna **21'** and forwards it through the wireless transceiver **24'** to the mobile wireless communications device **11.** The external antenna device **20'** also includes a battery **23'** configured to power the wireless transceiver **24'** and the processor **22'.**

Another example is directed to a method of providing spatial diversity in an electronic device **10** comprising a mobile wireless communications device **11** including a first housing **17,** a spatial diversity wireless transceiver **13** carried by the first housing, and at least one first antenna **14** carried by the first housing and coupled to the spatial diversity wireless transceiver. The method may include coupling an external antenna device **20** comprising a second housing **26,** and at least one second antenna **21** carried thereby to the spatial diversity wireless transceiver **13,** and using the spatial diversity wireless transceiver to selectively operate the at least one first antenna **14** and the at least one second antenna to provide the spatial diversity.

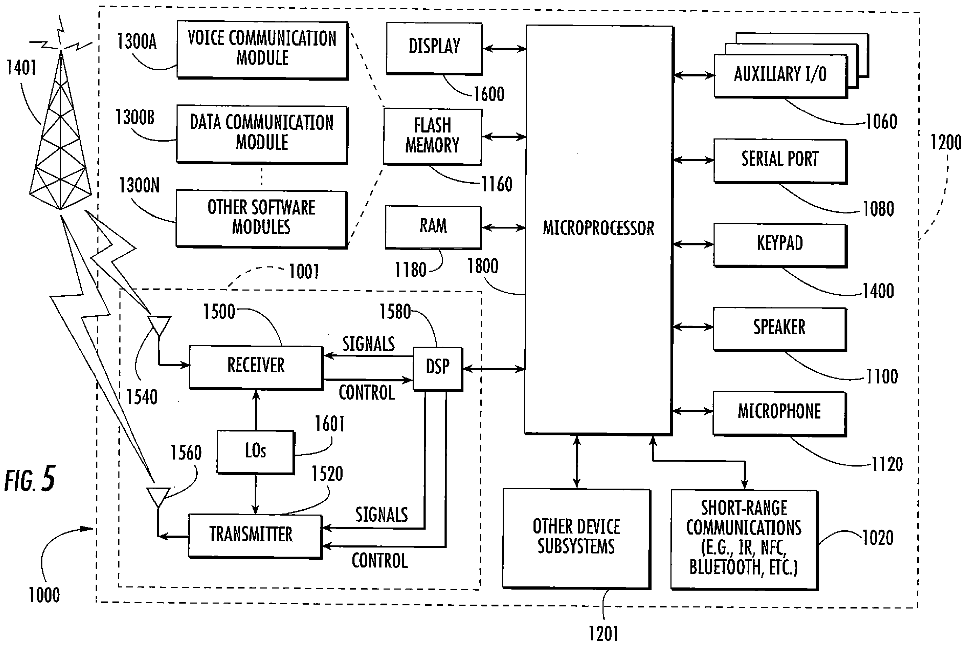

Example components of a mobile wireless communications device **1000** that may be used in accordance with the above-described examples are further described below with reference to FIG. 5. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device **1000.** The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a NFC sensor for communicating with a NFC device or NFC tag via NFC communications.

Many modifications and other examples will come to the mind of one skilled in the art having the benefit of the teachings presented in the foregoing descriptions and the associated drawings. Therefore, it is understood that various modifications and examples are intended to be included within the scope of the appended claims.

## Claims

1. An electronic device (10) comprising:
a mobile wireless communications device (11) comprising
a first housing (17),
a spatial diversity wireless transceiver (13) carried by said first housing,
at least one first antenna (14) carried by said first housing and coupled to said spatial diversity wireless transceiver,
a processor (15), and
a connector (36) carried by said first housing and coupled to said spatial diversity wireless transceiver and said processor; and
an external antenna device (20) comprising a second housing (26), and at least one second antenna (21) carried thereby and configured to be coupled to said spatial diversity wireless transceiver;
said spatial diversity wireless transceiver configured to selectively operate said at least one first antenna and said at least one second antenna to provide spatial diversity;
said connector being configured to couple said spatial diversity wireless transceiver to said at least one second antenna and to be coupled to a wired headset;
said processor configured to detect whether said external antenna device or the wired headset is coupled to said connector.

2. The electronic device of claim 1 wherein said external antenna device comprises a cable (19) extending from said second housing and configured to be coupled between said at least one second antenna and said connector.

3. The electronic device of claim 2 wherein said connector comprises a tip ring sleeve -TRS- connector (36) carried by an external surface of said first housing.

4. The electronic device of claim 1 wherein said processor (15) is configured to operate said spatial diversity wireless transceiver in a first multiple-input/multiple-output - MIMO- rank mode when said at least one second antenna is not connected to said spatial diversity wireless transceiver.

5. The electronic device of claim 4 wherein said processor is configured to operate said spatial diversity wireless transceiver in a second MIMO rank mode when said at least one second antenna is connected to said spatial diversity wireless transceiver, the second MIMO rank mode being greater than the first MIMO rank mode.

6. The electronic device of claim 1 wherein said spatial diversity wireless transceiver comprises a cellular 3GPP Long Term Evolution -LTE- transceiver.

7. The electronic device of claim 1 wherein said at least one first antenna is internal with respect to said first housing; and wherein said at least one second antenna is internal with respect to said second housing.

8. A method of providing spatial diversity in an electronic device (10) comprising a mobile wireless communications device (11) including a first housing (17), a spatial diversity wireless transceiver (13) carried by the first housing, at least one first antenna (14) carried by the first housing and coupled to the spatial diversity wireless transceiver, and a connector (36) carried by the first housing and coupled to the spatial diversity wireless transceiver, the connector also to be coupled to a wired headset, the method comprising:
coupling an external antenna device (20) comprising a second housing (26), and at least one second antenna (21) carried thereby to the spatial diversity wireless transceiver; and
using a processor to detect whether the external antenna device or the wired headset is coupled to the connector and to selectively operate the at least one first antenna and the at least one second antenna to provide the spatial diversity.

9. The method of claim 8 further comprising coupling a cable (19) extending from the second housing and between the at least one second antenna and the connector.

10. The method of claim 9 wherein the connector comprises a tip ring sleeve -TRS- connector (36) carried by an external surface of the first housing.

## Patentansprüche

1. Elektronische Vorrichtung (10), die umfasst:
eine mobile drahtlose Kommunikationsvorrichtung (11), die umfasst
ein erstes Gehäuse (17),
einen drahtlosen Raumdiversitäts-Sender/Empfänger (13), der durch das erste Gehäuse getragen wird,
wenigstens eine erste Antenne (14), die durch das erste Gehäuse getragen wird und an den drahtlosen Raumdiversitäts-Sender/Empfänger gekoppelt ist,
einen Prozessor (15) und
einen Verbinder (16), der durch das erste Gehäuse getragen wird und an den drahtlosen Raumdiversitäts-Sender/Empfänger und an den Prozessor gekoppelt ist; und
eine externe Antennenvorrichtung (20), die ein zweites Gehäuse (26) und wenigstens eine zweite Antenne (21), die dadurch getragen wird und konfiguriert ist, an den drahtlosen Raumdiversitäts-Sender/Empfänger gekoppelt zu sein, umfasst;
wobei der drahtlose Raumdiversitäts-Sender/Empfänger konfiguriert ist, die wenigstens eine erste Antenne und die wenigstens eine zweite Antenne selektiv zu betreiben, um eine Raumdiversität zu schaffen;
wobei der Verbinder konfiguriert ist, den drahtlosen Raumdiversitäts-Sender/Empfänger an die wenigstens eine zweite Antenne zu koppeln und an eine verdrahtete Sprechgarnitur gekoppelt zu sein;
wobei der Prozessor konfiguriert ist, zu detektieren, ob die externe Antennenvorrichtung oder die verdrahtete Sprechgarnitur an den Verbinder gekoppelt ist.

2. Elektronische Vorrichtung nach Anspruch 1, wobei die externe Antennenvorrichtung ein Kabel (19) umfasst, das sich von dem zweiten Gehäuse erstreckt und konfiguriert ist, zwischen die wenigstens eine zweite Antenne und den Verbinder gekoppelt zu sein.

3. Elektronische Vorrichtung nach Anspruch 2, wobei der Verbinder einen Klinkenstecker - TRS-Verbinder - (36) umfasst, der durch eine Außenfläche des ersten Gehäuses getragen wird.

4. Elektronische Vorrichtung nach Anspruch 1, wobei der Prozessor (15) konfiguriert ist, den drahtlosen Raumdiversitäts-Sender/Empfänger in einem Mehrfacheingangs-/Mehrfachausgangs-Modus des ersten Rangs - MIMO-Modus des ersten Rangs - zu betreiben, wenn die wenigstens eine zweite Antenne nicht mit dem drahtlosen Raumdiversitäts-Sender/Empfänger verbunden ist.

5. Elektronische Vorrichtung nach Anspruch 4, wobei der Prozessor konfiguriert ist, den drahtlosen Raumdiversitäts-Sender/Empfänger in einem MIMO-Modus des zweiten Rangs zu betreiben, wenn die wenigstens eine zweite Antenne mit dem drahtlosen Raumdiversitäts-Sender/Empfänger verbunden ist, wobei der MIMO-Modus des zweiten Ranges größer als der MIMO-Modus des ersten Rangs ist.

6. Elektronische Vorrichtung nach Anspruch 1, wobei der drahtlose Raumdiversitäts-Sender/Empfänger einen Zellen-Sender/Empfänger der langfristigen Entwicklung des 3GPP - Zellen-LTE-Sender/Empfänger des 3GPP - umfasst.

7. Elektronische Vorrichtung nach Anspruch 1, wobei die wenigstens eine erste Antenne bezüglich des ersten Gehäuses intern ist; und wobei die wenigstens eine zweite Antenne bezüglich des zweiten Gehäuses intern ist.

8. Verfahren zum Schaffen von Raumdiversität in einer elektronischen Vorrichtung (10), die eine mobile drahtlose Kommunikationsvorrichtung (11) umfasst, die ein erstes Gehäuse (17), einen drahtlosen Raumdiversitäts-Sender/Empfänger (13), der durch das erste Gehäuse getragen wird, wenigstens eine erste Antenne (14), die durch das erste Gehäuse getragen wird und an den drahtlosen Raumdiversitäts-Sender/Empfänger gekoppelt ist, und einen Verbinder (36), der durch das erste Gehäuse getragen wird und an den drahtlosen Raumdiversitäts-Sender/Empfänger gekoppelt ist, enthält, wobei der Verbinder außerdem an eine verdrahtete Sprechgarnitur gekoppelt ist, wobei das Verfahren umfasst:
Koppeln einer externen Antennenvorrichtung (20), die ein zweites Gehäuse (26) und wenigstens eine zweite Antenne (21), die dadurch getragen wird, umfasst, an den drahtlosen Raumdiversitäts-Sender/Empfänger; und
Verwenden eines Prozessors, um zu detektieren, ob die externe Antennenvorrichtung oder die verdrahtete Sprechgarnitur an den Verbinder gekoppelt ist, und um die wenigstens eine erste Antenne und die wenigstens eine zweite Antenne selektiv zu betreiben, um die Raumdiversität zu schaffen.

9. Verfahren nach Anspruch 8, das ferner das Koppeln eines Kabels (19), das sich von dem zweiten Gehäuse und zwischen der wenigstens einen zweiten Antenne und dem Verbinder erstreckt, umfasst.

10. Verfahren nach Anspruch 9, wobei der Verbinder einen Klinkenstecker - TRS-Verbinder - (36) umfasst, der durch eine Außenfläche des ersten Gehäuses getragen wird.

## Revendications

1. Dispositif électronique (10), comprenant :
un dispositif de communications sans fil mobile (11) comprenant :
un premier boîtier (17),
un émetteur-récepteur sans fil à diversité spatiale (13) porté par le premier boîtier,
au moins une première antenne (14) portée par ledit premier boîtier et couplée audit émetteur-récepteur sans fil à diversité spatiale,
un processeur (15), et
un connecteur (36) porté par ledit premier boîtier et couplé audit émetteur-récepteur sans fil à diversité spatiale et audit processeur ; et
un dispositif d'antenne externe (20) comprenant un deuxième boîtier (26), et au moins une deuxième antenne (21) portée par celui-ci et configurée pour être couplée audit émetteur-récepteur sans fil à diversité spatiale ;
ledit émetteur-récepteur sans fil à diversité spatiale étant configuré pour faire fonctionner de façon sélective ladite au moins une première antenne et ladite au moins une deuxième antenne de façon à produire une diversité spatiale ;
ledit connecteur étant configuré pour coupler ledit émetteur-récepteur sans fil à diversité spatiale à ladite au moins une deuxième antenne et pour être couplé à un écouteur câblé ;
ledit processeur étant configuré pour détecter si ledit dispositif d'antenne externe ou l'écouteur câblé est couplé audit connecteur.

2. Dispositif électronique selon la revendication 1, dans lequel ledit dispositif d'antenne externe comprend un câble (19) s'étendant à partir dudit deuxième boîtier, et configuré pour être couplé entre ladite au moins une deuxième antenne et ledit connecteur.

3. Dispositif électronique selon la revendication 2, dans lequel ledit connecteur comprend un connecteur à manchon à bague de pointe - TRS - (36) porté par une surface extérieure dudit premier boîtier.

4. Dispositif électronique selon la revendication 1, dans lequel ledit processeur (15) est configuré pour faire fonctionner ledit émetteur-récepteur sans fil à diversité spatiale dans un premier mode de rang à entrées multiples/sorties multiples - MIMO - lorsque ladite au moins une deuxième antenne n'est pas connectée audit émetteur-récepteur sans fil à diversité spatiale.

5. Dispositif électronique selon la revendication 4, dans lequel ledit processeur est configuré pour faire fonctionner ledit émetteur-récepteur sans fil à diversité spatiale dans un deuxième mode de rang MIMO lorsque ladite au moins une deuxième antenne est connectée audit émetteur-récepteur sans fil à diversité spatiale, le deuxième mode de rang MIMO étant supérieur au premier mode de rang MIMO.

6. Dispositif électronique selon la revendication 1, dans lequel ledit émetteur-récepteur sans fil à diversité spatiale comprend un émetteur-récepteur à évolution à long terme - LTE - cellulaire 3GPP.

7. Dispositif électronique selon la revendication 1, dans lequel ladite au moins une première antenne est interne vis-à-vis dudit premier boîtier; et dans lequel ladite au moins une deuxième antenne est interne vis-à-vis dudit deuxième boîtier.

8. Procédé de réalisation d'une diversité spatiale dans un dispositif électronique (10) comprenant un dispositif de communications sans fil mobile (11) comprenant un premier boîtier (17), un émetteur-récepteur sans fil à diversité spatiale (13) porté par le premier boîtier, au moins une première antenne (14) portée par le premier boîtier et couplée à l'émetteur-récepteur sans fil à diversité spatiale, et un connecteur (36) porté par le premier boîtier et couplé à l'émetteur-récepteur sans fil à diversité spatiale, le connecteur étant également destiné à être couplé à un écouteur câblé, le procédé comprenant :
le couplage d'un dispositif d'antenne externe (20) comprenant un deuxième boîtier (26), et au moins une deuxième antenne (21) portée par celui-ci à l'émetteur-récepteur sans fil à diversité spatiale ; et
l'utilisation d'un processeur de façon à détecter si le dispositif d'antenne externe ou l'écouteur câblé est couplé au connecteur et de façon à faire fonctionner de façon sélective l'au moins une première antenne et l'au moins une deuxième antenne de façon à produire la diversité spatiale.

9. Procédé selon la revendication 8, comprenant de plus le couplage d'un câble (19) s'étendant à partir du deuxième boîtier et entre l'au moins une deuxième antenne et le connecteur.

10. Procédé selon la revendication 9, dans lequel le connecteur comprend un connecteur à manchon à bague de pointe - TRS - (36) porté par une surface extérieure du premier boîtier.
